# EUROPÄISCHE PATENTSCHRIFT

(11) **EP 3 561 017 B1**
(45) Veröffentlichungstag und Bekanntmachung des Hinweises auf die Patenterteilung: **23.02.2022**
(21) Anmeldenummer: 19162496.4
(22) Anmeldetag: 13.03.2019
(51) Int. Cl.: C09J 123/22, C09J 153/02, C08K 3/26, C08K 3/34

(54) **KNETBARES HAFTELEMENT**
KNEADABLE ADHESIVE ELEMENT
ÉLÉMENT ADHÉSIF POUVANT ÊTRE MODELÉ

(30) Priorität: 23.04.2018 DE 102018109732
(43) Veröffentlichungstag der Anmeldung: 30.10.2019
(73) Patentinhaber: UHU GmbH & Co. KG, 77815 Bühl (Baden) (DE)
(72) Erfinder: Herrlich, Timo, 77815 Bühl (DE); Hanf, Christian, 77815 Bühl (DE); Rapp, Marie, 76437 Rastatt (DE); Zimmer, Bernd, 77886 Lauf (DE); Abbas, Fasih, 39104 Magdeburg (DE); Holtkamp, Tim, 76137 Karlsruhe (DE)
(74) Vertreter: advotec.

(56) Entgegenhaltungen:
- EP-A1- 0 874 876
- EP-A1- 1 584 654
- US-A- 3 984 369
- US-B2- 8 063 141

## Beschreibung

Die vorliegende Erfindung betrifft ein knetbares Haftelement zur reversiblen Fixierung eines Gegenstandes an einem Träger, z.B. einer Wand.

Derartige Haftelemente sind aus dem Stand der Technik bekannt. Diese werden in der Regel vor dem Einsatz etwas geknetet und anschließend auf das zu fixierende Objekt aufgedrückt. Dabei bleibt das Haftelement auf dem zu fixierenden Element haften. Anschließend wird der zu fixierende Gegenstand an einem Träger fixiert, indem das auf dem Gegenstand positionierte Haftelement auf den Träger gedrückt wird. Der Vorteil dieser Haftelemente besteht darin, dass die Befestigung reversibel ist, das heißt, dass es möglich ist, den montierten Gegenstand wieder vom Träger zu trennen, ohne dass dieser beschädigt wird. Dadurch unterscheiden sich derartige Haftelemente aus Haftklebemassen entscheidend von herkömmlichen Klebern oder Leimen, die im Allgemeinen zu einer endgültigen oder vom Benutzer als unzerstörbar gewünschten Montage führen.

Der erste knetbare Haftklebstoff wurde 1969 von Alan Holloway (Fa. Ralli Bondite) entwickelt, als dieser versuchte einen neuen Dichtstoff auf Basis von Kreide, Kautschuk und Öl herzustellen. Während sich diese Entwicklung als Dichtstoff wenig eignete, verkannte die Firma Ralli Bondite, spezialisiert für Dichtstoffe, dessen Potential als knetbare Haftklebstoffmasse. Später führte die Firma Bostik diese Formulierung, blau eingefärbt zur Unterscheidung von Kaugummimassen, als wiederverwendbare, knetbare Haftklebemasse unter dem Namen "Blu-Tack" ein. Die Basisrezepturbestandteile Kreide, Polyisobutylenkautschuk und Paraffinöl werden noch heute in allen am Markt erhältlichen knetbaren Haftklebstoffmassen verwendet. Allen am Markt erhältlichen knetbaren Haftklebstoffmassen ist gemein, dass diese in Abhängigkeit der Anwendungsdauer zunehmend schlechter wiederablösbar sind. Eine zerstörungsfreie Wiederablösung von empfindlichen Oberflächen wie Tapeten, insbesondere Raufasertapeten sowie von Postern, ist sehr schwierig und in einigen Fällen nicht möglich. Ein weiterer Nachteil bekannter Haftklebstoffe ist eine ausgeprägte und temperaturabhängige Tendenz zum Kriechen. Dieses Kriechverhalten wird zwar in moderneren Entwicklungen durch den Einsatz anisotroper Füllstoffe teilweise reduziert, jedoch nicht vollständig unterdrückt. Das Kriechverhalten führt zu einem mit der Anwendungsdauer zunehmenden Eindringen der Klebemasse insbesondere in mikroporöse oder feinstrukturierte Oberflächen und damit zu einer verschlechterten Wiederablösbarkeit. Zum anderen begünstigt das Kriechen einen Kohäsionsverlust und damit einen ungewollten Abriss der Verklebung.

In EP0874876 werden druckempfindliche wiederablösbare Klebstoffpasten beschrieben. Für die Verbesserung der Kohäsion und somit des Kriechverhaltens wird darin der Einsatz einer erhöhten Menge anisotroper Füllstoffe vorgeschlagen. Zudem wird der Einsatz von bis zu 12 Gew.% eines klebrigmachenden Harzes empfohlen, was einer sauberen Wiederablösbarkeit deutlich entgegensteht.

In DE10317788 wird ein Gegenstand beschrieben, dessen Wiederablösbarkeit auf das Rückstellvermögen einer ein- oder beidseitig haftklebrigen elastischen Klebfolie auf Polyurethanbasis beruht. Das Polyurethan wurde für das Rückstellvermögen der Haftklebfolie chemisch vernetzt. Das Ablösen der Klebung beruht dabei auf dem Effekt, dass die Klebfolie beim daran Ziehen einschnürt. Dieser Lösungsweg benötigt einerseits glatte Oberflächen, andererseits muss für die Wiederablösbarkeit stets ein Teil des Klebstoffs hinter den verklebten Flächen herausragen, um später bei der Wiederablösung daran ziehen zu können. Der Anwender kann den Ablöseprozess hinter den Verklebten Teilen nicht sehen. Ein zu schnelles Ziehen kann zu einer Beschädigung z.B. einer Tapete führen.

Die Dokumente EP 1 584 654 A, US 3,984,369 A sowie US 8,063,141 B2 beschreiben Klebstoffzusammensetzungen, welche Polyisobutylen und ein styrolhaltiges Copolymer enthalten. Auch bei diesen Klebstoffzusammensetzungen ist eine saubere Wiederablösbarkeit der Klebstoffzusammensetzung nicht oder nicht in ausreichendem Maße gegeben.

Der vorliegenden Erfindung liegt die Aufgabe zugrunde, die Nachteile der aus dem Stand der Technik bekannten Haftklebstoffmassen zu überwinden. Der Erfindung liegt insbesondere die Aufgabe zugrunde, ein Befestigungsmittel in Form eines Haftelements zur Verfügung zu stellen, welches eine verbesserte Wiederablösung von Oberflächen, wie Raufasertapeten, Vliestapeten oder Postern und idealerweise gleichzeitig ein vermindertes Kriechverhalten zeigt.

Diese Aufgabe wird erfindungsgemäß gelöst durch ein Haftelement mit den Merkmalen des Anspruchs 1.

Wie die unten dargelegten Anwendungsbeispiele eindrucksvoll belegen, haben die Erfinder überraschenderweise herausgefunden, dass mit einem Haftelement mit der in Anspruch 1 angegebenen Kombination von Komponenten ein deutlich verbessertes Wiederablöseverhalten erreicht werden kann. Ebenfalls überraschend hat sich herausgestellt, dass es insbesondere die Kombination aus styrolhaltigem Blockcopolymer mit dem synthetischen Kautschuk und dem Paraffinöl ist, die die gewünschten Eigenschaften zur Verfügung stellt. Eine derartige Kombination ist bislang bei keiner der bekannten Haftklebemassen zur temporären Fixierung eines Gegenstandes an einem Träger bekannt.

Beim erfindungsgemäßen Haftelement ist Komponente a) mit einem Anteil von 2 bis 15 Gew.%, vorzugsweise 4 bis 11 Gew.%, Komponente b) mit einem Anteil von 0,2 bis 8 Gew.%, vorzugsweise 0,5 bis 5 Gew.%, Komponente c) mit einem Anteil von 7 bis 15 Gew.%, vorzugsweise 10 bis 13 Gew.% und Komponente d) mit einem Anteil von 60 bis 85 Gew.%, vorzugsweise 75 bis 80 Gew.% enthalten.

Es hat sich herausgestellt, dass insbesondere ein Anteil von 0,2 bis 8 Gew.% an styrolhaltigem Blockcopolymer die oben genannten, gewünschten Eigenschaften bringt. Besonders gute Ergebnisse lassen sich mit einem Anteil an styrolhaltigem Blockcopolymer von 0,5 bis 5 Gew.% erzielen.

Mit Vorteil wird als Komponente a) Polyisobutylen eingesetzt.

Werden die Molekulargewichte höher gewählt als die angegebenen Werte, wird das Haftelement zu hart und lässt sich nicht mehr in befriedigender Weise kneten und zur Fixierung einsetzen.

Bei einer bevorzugten Ausführungsform des erfindungsgemäßen Haftelements handelt es sich bei der Komponente b) um mindestens eines aus der Gruppe von SEBS, SEPS, SBS und SIS. Die genannten Blockcopolymere sind aus dem Stand der Technik bekannt. So handelt es sich beispielsweise bei SEBS um ein Styrol-Blockcopolymer, bestehend aus zwei Styrolendblöcken (harte Komponente) und einem weichen Ethylen-Buten-Mittelblock. Als Alternative zu Buten kann auch Butadien verwendet werden. Bei einem Styrol-Blockcopolymer SEPS wird anstelle von Buten Propylen verwendet. SIS umfasst zwei Styrol-Endblöcke sowie einen Isopren-Mittelblock.

Bei einer besonders bevorzugten Ausführungsform des erfindungsgemäßen Haftelements ist das styrolhaltige Blockcopolymer ein hydriertes Triblockpolymer, entweder bestehend aus den Monomeren Styrol, Ethylen, Buten und Styrol (SEBS), vorzugsweise mit einem Styrolanteil von 25 bis 35 Gew.% und einer Viskosität in Toluol von 200 bis 2.000 mPas (cP), vorzuzgsweise von 250 bis 550 mPas (cP), oder bestehend aus den Monomeren Styrol, Ethylen, Butadien und Styrol mit einem Styrolanteil von 25 bis 35 Gew.% und einer Viskosität in Toluol von 200 bis 2.000 mPas (cP), vorzuzgsweise von 250 bis 550 mPas (cP).

Es hat sich herausgestellt, dass ein solches Blockcopolymer im erfindungsgemäßen Haftelement ein besonders vorteilhaftes Wiederablösungsverhalten von einem Träger bzw. einem zu fixierenden Objekt zeigt.

Mit Vorteil ist Komponente c) mindestens eine aus der Gruppe von mineralölbasierten paraffinbasischen Raffinaten und/oder Solvaten, technischen Weißölen, Hydrocrackölen und vollsynthetischen Paraffinölen, insbesondere gewonnen aus einem gas-to-liquid-Verfahren.

Mit derartigen Ölen wird ein besonders vorteilhaftes Knetverhalten des erfindungsgemäßen Haftelements erreicht.

Mit Vorteil weist das Paraffinöl (Komponente c)) eine Kohlenstoffverteilung (paraffinisch/naphtenisch, S-korr.) > 65% sowie eine kinematische Viskosität bei 20 °C von 90 bis 150 mm²/s auf.

Komponente d) ist vorzugsweise mindestens eine aus der Gruppe, bestehend aus Kreide, Dolomit, Baryt, Talk, Kaolin, Ton, Glas, Glasmehl, Quarz, Titandioxid, Zinkoxid und Ruß.

In der Regel enthält das erfindungsgemäß Haftelement weitere Additive aus der Gruppe von Harzen, Pigmenten Lichtschutzmitteln, Antioxidantien, Flammschutzmitteln, Verarbeitungshilfsmitteln, Wachsen und Gleitmitteln, vorzugsweise mit einem Anteil bis zu 5 Gew.%.

Die vorliegende Erfindung betrifft ferner die Verwendung eines erfindungsgemäßen Haftelements zur temporären Fixierung von Objekten aneinander oder an einem Träger.

Bei einer bevorzugten Variante der erfindungsgemäßen Verwendung sind die zu fixierenden Objekte aus Papier, Holz, Kunststoff, Glas, Stein und/oder Metall gefertigt sind, wobei der Träger vorzugsweise eine saugfähige oder nicht saugfähige Oberfläche aufweist.

Anhand der nachfolgend dargelegten Beispiele wird die vorliegende Erfindung und ihre Vorteile näher illustriert.

### Beispiele:

### Anwendungstechnische Prüfungen:

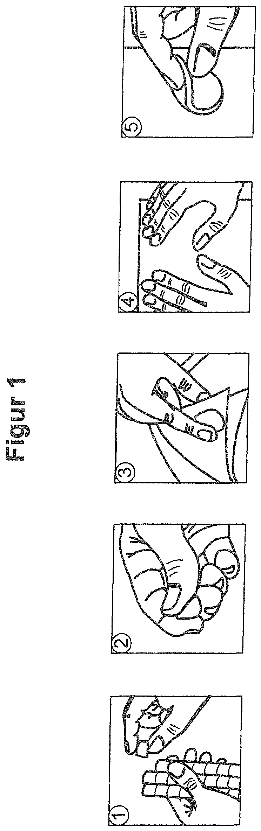

Wiederablösbarkeit (siehe Figur 1):
Zur Bestimmung der Wiederablösbarkeit werden Posterstreifen (100 mm x 50 mm, 130 g/m²) auf verschiedenen Oberflächen (Raufasertapete, Vliestapete, Vinyltapete) per Hand aufgeklebt. Dazu werden jeweils 1,00 g bis 1,05 g der zu testenden knetbaren Haftklebmasse abgewogen. Diese Portionen entsprechen jeweils einem zu testenden Haftelement. Diese werden jeweils 10x geknetet (Bild 2) und zu einer Kugel geformt und anschließend zusammen mit dem Posterstreifen auf die Oberflächen für 5 sec. angedrückt (Bild 3+4). Nach 4 Wochen wird die Wiederablösbarkeit geprüft. Dazu wird durch Abschälen (Bild 5) das Poster vom Klebstoff und von der der jeweiligen Testwand getrennt. Die Testkriterien sind dabei rückstands- und zerstörungsfreies Ablösen von den jeweiligen Oberflächen (Posterstreifen und Testwand).

Wärmezugstandfestigkeit:
Zur Bestimmung der Dauerbelastbarkeit einer Verklebung mit zu testender knetbarer Haftklebemasse wird diese unter statischer Belastung in einem sogenannten Wärmezugstandtest (Zeitstandversuch) geprüft.

Dazu werden jeweils 1,00 g bis 1,05 g der zu testenden knetbaren Haftklebmasse abgewogen, jeweils 10x geknetet und zu einer Kugel geformt. Die Kugel wird auf einem sauberen Aluminium-Prüfkörper (80 mm x 25 mm x 1,5 mm) leicht angedrückt. Danach wird ein 2. Aluminiumprüfkörper (30 mm x 20 mm x 1,5 mm) überlappend aufgelegt und für 5 sec bei 5 bar maschinell zusammengedrückt. Die so verpressten Aluminiumprüfkörper werden dann bei 40°C in einen Wärmezugstandschrank aufgehängt und mit 320 g bzw. 500 g belastet. Die Zeit bis zu einer Trennung der Verklebung werden dabei elektronisch überwacht. Die Messung wird nach Erreichen der Anforderungskriterien von 1000 h beendet und gilt als bestanden. Anmerkung: Bei einer Haltedauer von 1000 h ist von einer ausreichenden Kriechbeständigkeit auszugehen. Jede Formulierung wird 5x parallel getestet.

Knetbarkeit:
Zur Bestimmung der Knetbarkeit wird die zu testende Haftklebmasse zwischen Daumen und Zeigefinger 1 min lang geknetet. Die Bewertung der Knetbarkeit erfolgt qualitativ anhand dem Vergleich mit Referenzproben [sehr leicht (1), Leicht (2), mittel (3), hart (4), sehr hart (5)]. Als Referenz für die Probezusammensetzungen 2 - 6 dient die Probezusammensetzung 1. Als Referenz für die Probezusammensetzungen 8 - 10 dient die Probezusammensetzung 7 (siehe untenstehende Tabelle). Die Abstufungen der Referenzproben bezüglich Knetbarkeit ergeben sich aus einer Konzentrationsreihe mit Paraffinöl. Dabei entspricht Formulierung 1 (Vgl.) = leicht (2). Durch Hinzufügen von +1 Gew.% Paraffinöl (= sehr leicht (1)) bzw. Weglassen von Paraffinöl (-1 Gew.%: mittel (3), -2 Gew.% Öl: hart (4), etc.) in die Formulierung werden die anderen Referenzproben in ihrer Knetbarkeit eingestellt.

### Formulierungen:

| | 1 (Vgl.) | 2 (Erf.) | 3 (Erf.) | 4 (Erf.) | 5 (Erf.) | 6 (Erf.) |
|---|---|---|---|---|---|---|
| Kautschuk (PIB) | 10,5 | 9,9 | 7,1 | 6,4 | 6,4 | 4,7 |
| Thermoplastisches Elastomer (SEBS) | - | 0,6 | 2,4 | 3,0 | 3,0 | 4,7 |
| Paraffinöl | 11 | 11 | 12 | 12 | 12 | 12,3 |
| Kreide | 66,2 | 66,2 | 66,2 | 66,3 | 70,3 | 66 |
| Kaolin | 10 | 10 | 10 | 10 | 6 | 10 |
| Hilfsstoffe | 2,3 | 2,3 | 2,3 | 2,3 | 2,3 | 2,3 |

| | 7 (Vgl.) | 8 (Erf.) | 9 (Erf.) | 10 (Erf.) |
|---|---|---|---|---|
| Kautschuk (PIB) | 11 | 10,4 | 7,7 | 4,7 |
| Thermoplastisches Elastomer (SEBS) | - | 0,6 | 2,5 | 4,7 |
| Paraffinöl | 13 | 13 | 14 | 14 |
| Kreide | 48,7 | 48,7 | 48,5 | 49,3 |
| Kaolin | 26 | 26 | 26 | 26 |
| Hilfsstoffe | 1,3 | 1,3 | 1,3 | 1,3 |

### Prüfungen:

| | 1 (Vgl.) | 2 (Erf.) | 3 (Erf.) | 4 (Erf.) | 5 (Erf.) | 6 (Erf.) |
|---|---|---|---|---|---|---|
| Knetbarkeit: | Leicht (2) | leicht (2) | leicht (2) | leicht (2-3) | leicht (2) | leicht (2) |
| Wiederablösbarkeit nach 4 Wochen: Bewertungskriterien: - Rückstandsfrei - ohne Beschädigung der Tapete | Referenz: teilweise Rückstände und Beschädigung der Tapete | besser ablösbar | Signifikant besser ablösbar | Signifikant besser ablösbar | Signifikant besser ablösbar | Signifikant besser ablösbar |
| Wärmezugstandfestigkeit: 1000h/40°C/320g | 3 von 5 bestanden | 5 von 5 bestanden | 5 von 5 bestand en | 5 von 5 bestand en | 5 von 5 bestanden | 5 von 5 bestanden |

| | 7 (Vgl.) | 8 (Erf.) | 9 (Erf.) | 10 (Erf.) |
|---|---|---|---|---|
| Knetbarkeit: | mittel (3) | mittel (3) | mittel (3) | mittel (3) |
| Wiederablösbarkeit nach 4 Wochen: Bewertungskriterien: - Rückstandsfrei - ohne Beschädigung der Tapete | Referenz: teilweise Rückstände und Beschädigung der Tapete | besser ablösbar | Signifikant besser ablösbar | Signifikant besser ablösbar |
| Wärmezugstandfestigkeit: 1000h/40°C/500g | 4 von 5 bestanden | 5 von 5 bestanden | 5 von 5 bestanden | 5 von 5 bestanden |

| | Stand der Technik 1 | Stand der Technik 2 | Stand der Technik 3 |
|---|---|---|---|
| Kautschuk (PIB) | 10 | 10 | 10 |
| Thermoplastisches Elastomer (SEBS) | 0 | 0 | 0 |
| Paraffinöl | 12 | 12 | 12 |
| Kreide | 65 | 67 | 65 |
| Kaolin | 10 | 0 | 0 |
| Hilfsstoffe | 3 | 11 | 13 |

| | Stand der Technik 1 | Stand der Technik 2 | Stand der Technik 3 |
|---|---|---|---|
| Knetbarkeit: | mittel (2) | mittel (2) | mittel (2) |
| Wiederablösbarkeit nach 4 Wochen: Bewertungskriterien: - Rückstandsfrei - ohne Beschädigung der Tapete | teilweise Rückstände und Beschädigung der Tapete | teilweise Rückstände und Beschädigung der Tapete | teilweise Rückstände und Beschädigung der Tapete |
| Wärmezugstandfestigkeit: 1000h/40°C/320g | 3 von 5 bestanden | 0 von 5 bestanden | 2 von 5 bestanden |

Wie aus den Tabellen eindrucksvoll hervorgeht, weisen diejenigen Probezusammensetzungen, welche ein Styrol-Blockcopolymer (thermoplastisches Elastomer) aufweisen, signifikant bessere Wiederablösbarkeiten auf. In den Proben, in welchen kein styrolhaltiges Blockcopolymer enthalten ist, kommt es beim Entfernen der Haftelemente teilweise zu Rückständen auf dem zu befestigenden Gegenstand oder auf dem Träger sowie zu Beschädigungen der zu befestigenden Gegenstände. Dies belegt eindrucksvoll die vorteilhafte Wirkung des Styrol-Blockcopolymers im erfindungsgemäßen Haftelement.

Das erfindungsgemäße Haftelement kann bereits in seiner definierten Größe und/oder Form vorliegen (z.B. in Form von kleinen, rechteckigen Tafeln). Das erfindungsgemäße Haftelement kann jedoch auch zunächst als undefinierte größere Masse vorliegen, wobei es dann aus der Ursprungsmasse durch Abtrennen aus dieser gewonnen wird.

## Patentansprüche

1. Knetbares Haftelement zur reversiblen Fixierung eines Gegenstandes an einem Träger, enthaltend mindestens folgende Komponenten:
a) mindestens einen synthetischen Kautschuktypen auf Basis von Polybuten und/oder Polyisobutylen und/oder Isopren und/oder Derivaten davon;
b) mindestens ein styrolhaltiges Blockcopolymer;
c) Paraffinöl;
d) anorganische Füllstoffe, wobei Komponente a) mit einem Anteil von 2 bis 15 Gew.%, enthalten ist, Komponente b) mit einem Anteil von 0,2 bis 8 Gew.% enthalten ist, Komponente c) mit einem Anteil von 7 bis 15 Gew.% enthalten ist und Komponente d) mit einem Anteil von 60 bis 85 Gew.% enthalten ist.

2. Haftelement nach Anspruch 1, **dadurch gekennzeichnet, dass** Komponente a) mit einem Anteil von 4 bis 11 Gew.% enthalten ist, Komponente b) mit einem Anteil von 0,5 bis 5 Gew.% enthalten ist, Komponente c) mit einem Anteil von 10 bis 13 Gew.% enthalten ist und Komponente d) mit einem Anteil von 75 bis 80 Gew.% enthalten ist.

3. Haftelement nach einem der Ansprüche 1 oder 2, **dadurch gekennzeichnet, dass** als Komponente a) Polyisobutylen eingesetzt wird.

4. Haftelement nach einem der vorhergehenden Ansprüche, **dadurch gekennzeichnet, dass** es sich bei der Komponente b) mindestens um eines aus der Gruppe von SEBS, SEPS, SBS und SIS handelt.

5. Haftelement nach einem der vorhergehenden Ansprüche, **dadurch gekennzeichnet, dass** Komponente c) mindestens eine aus der Gruppe von mineralölbasierten paraffinbasischen Raffinaten und/oder Solvaten, technische Weißölen, Hydrocrackölen und vollsynthetischen Paraffinölen, insbesondere gewonnen aus einem gas-to-liquid-Verfahren, ist.

6. Haftelement nach Anspruch 5, **dadurch gekennzeichnet, dass** das Paraffinöl (Komponente c)) eine Kohlenstoffverteilung (paraffinisch/naphtenisch, S-korr.) > 65% sowie eine kinematische Viskosität bei 20 °C von 90 bis 150 mm²/s aufweist.

7. Haftelement nach Anspruch 1, **dadurch gekennzeichnet, dass** als Komponente d) mindestens eine aus der Gruppe, bestehend aus Kreide, Dolomit, Baryt, Talk, Kaolin, Ton, Glas, Glasmehl, Quarz, Titandioxid, Zinkoxid und Ruß, enthalten ist.

8. Haftelement nach einem der vorhergehenden Ansprüche, **dadurch gekennzeichnet, dass** weitere Additive, ausgewählt aus der Gruppe von Harzen, Pigmenten, Lichtschutzmitteln, Antioxidantien, Flammschutzmitteln, Verarbeitungshilfsmitteln, Wachsen und Gleitmitteln, vorzugsweise mit einem Anteil bis zu 5 Gew.% enthalten sind.

9. Verwendung eines Haftelements nach einem der Ansprüche 1 bis 8 zur temporären Fixierung von Objekten aneinander oder an einem Träger.

10. Verwendung nach Anspruch 9, **dadurch gekennzeichnet, dass** die zu fixierenden Objekte aus Papier, Holz, Kunststoff, Glas, Stein und/oder Metall gefertigt sind, wobei der Träger vorzugsweise eine saugfähige oder nicht saugfähige Oberfläche aufweist.

## Claims

1. A kneadable adhesive element for reversibly fixing an object to a support, the adhesive element containing at least the following components:
a) at least one synthetic rubber type on the basis of polybutene and/or polyisobutene and/or isoprene and/or derivatives thereof;
b) at least one block copolymer containing styrene;
c) paraffin oil;
d) inorganic fillers, wherein component a) is contained in an amount of 2 to 15 wt%, component b) is contained in an amount of 0.2 to 8 wt%, component c) is contained in an amount of 7 to 15 wt%, and component d) is contained in an amount of 60 to 85 wt%.

2. The adhesive element according to claim 1, **characterized in that** component a) is contained in an amount of 4 to 11 wt%, component b) is contained in an amount of 0.5 to 5 wt%, component c) is contained in an amount of 10 to 13 wt%, and component d) is contained in an amount of 75 to 80 wt%.

3. The adhesive element according to any one of claims 1 or 2, **characterized in that** polyisobutene is used as component a).

4. The adhesive element according to any one of the preceding claims, **characterized in that** component b) is at least one from the group of SEBS, SEPS, SBS, and SIS.

5. The adhesive element according to any one of the preceding claims, **characterized in that** component c) is at least one from the group of mineral-oil-based paraffinic raffinates and/or solvates, technical white oils, hydrocracked oils, and fully synthetic paraffin oils, in particular obtained from a gas-to-liquid process.

6. The adhesive element according to claim 5, **characterized in that** the paraffin oil (component c)) has a carbon distribution (paraffinic/naphthenic, S-corr.) > 65 % and a kinematic viscosity at 20 °C of 90 to 150 mm²/s.

7. The adhesive element according to claim 1, **characterized in that** at least one from the group consisting of chalk, dolomite, baryte, talc, kaolin, clay, glass, glass powder, quartz, titanium dioxide, zinc oxide, and carbon black is contained as component d).

8. The adhesive element according to any one of the preceding claims, **characterized in that** other additives, which are selected from the group of resins, pigments, light stabilizers, antioxidants, flame retardants, processing aids, waxes and lubricants, are preferably contained in an amount of up to 5 wt%.

9. A use of an adhesive element according to any one of claims 1 to 8 for temporarily fixing objects to each other or to a support.

10. The use according to claim 9, **characterized in that** the objects to be fixed are made of paper, wood, plastic, glass, stone, and/or metal, the support preferably having an absorbent or non-absorbent surface.

## Revendications

1. Élément adhésif malléable pour fixer de manière réversible un objet à un support, l'élément adhésif contenant au moins les composants suivants :
a) au moins un type de caoutchouc synthétique à base de polybutène et/ou polyisobutène et/ou isoprène et/ou dérivés de ces-ci ;
b) au moins un copolymère séquencé contenant du styrène ;
c) l'huile de paraffine ;
d) des charges inorganiques, dans lequel le composant a) est contenu à une teneur de 2 à 15 % en poids, le composant b) est contenu à une teneur de 0,2 à 8 % en poids, le composant c) est contenu à une teneur de 7 à 15 % en poids et le composant d) est contenu à une teneur de 60 à 85 % en poids.

2. Élément adhésif selon la revendication 1, **caractérisé en ce que** le composant a) est contenu à une teneur de 4 à 11 % en poids, le composant b) est contenu à une teneur de 0,5 à 5 % en poids, le composant c) est contenu à une teneur de 10 à 13 % en poids et le composant d) est contenu à une teneur de 75 à 80 % en poids.

3. Élément adhésif selon l'une quelconque des revendications 1 ou 2, **caractérisé en ce que** le polyisobutène est utilisé comme composant a).

4. Élément adhésif selon l'une quelconque des revendications précédentes, **caractérisé en ce que** le composant b) est au moins un parmi le groupe de SEBS, SEPS, SBS et SIS.

5. Élément adhésif selon l'une quelconque des revendications précédentes, **caractérisé en ce que** le composant c) est au moins un parmi le groupe de raffinats et/ou solvates de paraffine à base d'huile minérale, huiles blanches techniques, huiles hy-drocraquées et huiles de paraffine entièrement synthétiques, obtenus notamment par un procédé GTL (*gas-to-liquid*)*.*

6. Élément adhésif selon la revendication 5, **caractérisé en ce que** l'huile de paraffine (le composant c)) a une distribution de carbone (paraffinique/naphténique, corrigé pour S) > 65 % et une viscosité cinématique à 20 °C de 90 à 150 mm²/s.

7. Élément adhésif selon la revendication 1, **caractérisé en ce qu'**au moins un parmi le groupe consistant en craie, dolomite, baryte, talc, kaolin, argile, verre, poudre de verre, quartz, dioxyde de titane, oxyde de zinc et noir de carbone est contenu comme composant d).

8. Élément adhésif selon l'une quelconque des revendications précédentes, **caractérisé en ce que** des autres additifs, qui sont choisis dans le groupe de résines, pigments, agents photoprotecteurs, antioxydants, retardateurs de flamme, auxiliaires technologiques, cires et lubrifiants, sont contenus de préférence à une teneur de jusqu'à 5 % en poids.

9. Utilisation d'un élément adhésif selon l'une quelconque des revendications 1 à 8 pour fixer temporairement des objets les uns aux autres ou à un support.

10. Utilisation selon la revendication 9, **caractérisé en ce que** les objets à fixer sont faits en papier, bois, matière plastique, verre, pierre et/ou métal, le support ayant de préférence une surface absorbante ou non absorbante.
